# EUROPEAN PATENT APPLICATION

(11) **EP 3 869 723 A1**
(43) Date of publication of application: **25.08.2021**
(21) Application number: 19883603.3
(22) Date of filing: 04.11.2019
(51) Int. Cl.: H04L 5/00

(54) **METHOD AND APPARATUS FOR TRANSMITTING CHANNEL STATE INFORMATION**

(30) Priority: 13.11.2018 CN 201811348263
(71) Applicant: Huawei Technologies Co., Ltd., Longgang District Shenzhen, Guangdong 518129 (CN)
(72) Inventor: GAO, Fei, Shenzhen, Guangdong 518129 (CN); JIAO, Shurong, Shenzhen, Guangdong 518129 (CN); HUA, Meng, Shenzhen, Guangdong 518129 (CN); ZHOU, Han, Shenzhen, Guangdong 518129 (CN)
(74) Representative: Gill Jennings & Every LLP
(86) International application number: PCT/CN2019/115283
(87) International publication number: WO 2020/098522

(57) **Abstract**

Embodiments of this application provide a channel state information transmission method and an apparatus. The channel state information transmission method in this application includes: receiving first higher layer signaling sent by a network device, where the first higher layer signaling is used to indicate a first physical uplink control channel, and the first physical uplink control channel is a channel used to periodically report channel state information CSI; receiving downlink control information sent by the network device, where the downlink control information is used to schedule a physical downlink shared channel; and sending the CSI by using the first physical uplink control channel and a second physical uplink control channel, or sending the CSI by using a second physical uplink control channel. In the embodiments of this application, the CSI can be transmitted more flexibly and quickly.

## Description

This application claims priority to Chinese Patent Application No. 2018113482636, filed with the Chinese Patent Office on November 13, 2018 and entitled "CHANNEL STATE INFORMATION TRANSMISSION METHOD AND APPARATUS", which is incorporated herein by reference in its entirety.

### TECHNICAL FIELD

Embodiments of this application relate to communications technologies, and in particular, to a channel state information transmission method and an apparatus.

### BACKGROUND

The 3GPP standard organization is currently formulating protocol standards for a 5th generation cellular mobile communications system (5th Generation, 5G for short below, also referred to as new radio (New Radio, NR)). A channel state information reference signal (Channel state information reference signal, CSI-RS) is introduced in LTE Release 10 (release 10, R10). Similar to channel state information (Channel state information, CSI) measurement in 4G LTE, CSI measurement in NR is also based on a received CSI-RS, and channel estimation is performed on the received CSI-RS, to obtain a channel state measurement result and an interference measurement result.

The CSI measurement includes periodic measurement and aperiodic measurement. For the aperiodic CSI measurement, a network device triggers aperiodic CSI reporting (when a value of a CSI request field is not 0) by using the CSI request field in downlink control information (DCI format 0_1) used for uplink scheduling. The CSI request field indicates a specific trigger state that triggers the aperiodic CSI reporting. After sending the downlink control information (DCI format 0_1) used for uplink scheduling, the network device sends an aperiodic CSI-RS resource in an aperiodic CSI-RS resource set bound to the trigger state. After user equipment (UE) receives and parses the downlink control information (DCI format 0_1) used for uplink scheduling, and learns that the aperiodic CSI reporting is triggered, the UE measures the bound aperiodic CSI-RS resource based on the trigger state indicated by the CSI request field, and reports CSI by using a PUSCH scheduled by the downlink control information (DCI format 0_1) used for uplink scheduling.

However, the network device can trigger the aperiodic CSI reporting only by using the foregoing downlink control information (DCI format 0_1) used for uplink scheduling, but this aperiodic CSI reporting manner is not flexible enough.

### SUMMARY

Embodiments of this application provide a channel state information transmission method and an apparatus, to transmit CSI more flexibly and quickly.

According to a first aspect, an embodiment of this application provides a channel state information transmission method, including:
receiving first higher layer signaling sent by a network device, where the first higher layer signaling is used to indicate a first physical uplink control channel, and the first physical uplink control channel is a channel used to periodically report channel state information CSI; receiving downlink control information sent by the network device, where the downlink control information is used to schedule a physical downlink shared channel; and sending the CSI by using the first physical uplink control channel and a second physical uplink control channel, or sending the CSI by using a second physical uplink control channel, where the second physical uplink control channel is indicated by the downlink control information or second higher layer signaling, a time at which the CSI is sent by using the second physical uplink control channel is earlier than a time at which the CSI is sent by using a first physical uplink control channel in a next periodicity, and the next periodicity is a next periodicity of a periodicity in which the current first physical uplink control channel is located.

The CSI is sent by using the first PUCCH and the second PUCCH, or the CSI is sent by using the second PUCCH. Because the second PUCCH is indicated by the DCI or the second higher layer signaling, and a time domain position of the second PUCCH is earlier than that of the first PUCCH in the next periodicity, the CSI can be reported flexibly and quickly.

In a possible design, the time domain position at which the second physical uplink control channel is located is earlier than a time domain position at which any third physical uplink control channel is located, each third physical uplink control channel is a channel used to periodically report the CSI, and the third physical uplink control channel and the first physical uplink control channel belong to different periodicities.

For third PUCCHs in different periodicities, the CSI is sent by using the third PUCCH and the second PUCCH, or the CSI is sent by using the second PUCCH. Because the time domain position of the second PUCCH is earlier than that of the third PUCCH, the CSI can be reported flexibly and quickly.

In a possible design, the method further includes: determining the CSI based on a reference signal RS resource, where the RS resource includes at least one of a CSI-RS resource, a physical downlink shared channel data demodulation reference signal PDSCH DMRS resource, and a physical downlink control channel demodulation reference signal PDCCH DMRS resource; and sending indication information to the network device, where the indication information is used to indicate an index of the RS resource used to determine the CSI.

The CSI is determined based on at least one of the CSI-RS resource, the physical downlink shared channel data demodulation reference signal PDSCH DMRS resource, and the physical downlink control channel demodulation reference signal PDCCH DMRS resource, and the index of the RS resource used to determine the CSI is indicated to the network device by using the indication information. In this way, the network device can determine, based on the index, a reference signal corresponding to the CSI, and determine channel quality of a corresponding bandwidth based on a frequency domain resource occupied by the reference signal.

In a possible design, the RS resource used to determine the CSI is the CSI-RS resource, the last time domain symbol in which the CSI-RS resource is located is before the second physical uplink control channel by a first preset quantity of time domain symbols, and the first preset quantity is greater than 0.

According to this design, it can be ensured that measurement on the CSI-RS resource meets a CSI calculation delay requirement, to ensure that the CSI is sent on the second PUCCH.

In a possible design, the RS resource used to determine the CSI is the CSI-RS resource; and a time domain symbol in which the CSI-RS resource is located is not earlier than the first time domain symbol of the downlink control information; or the CSI-RS resource includes a first CSI-RS resource and a second CSI-RS resource, the first CSI-RS resource is not earlier than a next time domain symbol of the last time domain symbol of a closest first physical uplink control channel, the closest first physical uplink control channel is before the second physical uplink control channel and is closest to the time domain position of the second physical uplink control channel, each second CSI-RS resource is not earlier than a next time domain symbol of the last time domain symbol of a closest third physical uplink control channel, and the closest third physical uplink control channel is before the second physical uplink control channel, closest to the time domain position of the second physical uplink control channel, and bound to the second CSI-RS resource.

In a possible design, the RS resource used to determine the CSI is the CSI-RS resource, the first time domain symbol in which the CSI-RS resource is located is not earlier than the second physical uplink control channel by a second preset quantity of time domain symbols, the second preset quantity is a sum of the first preset quantity and a third preset quantity, and the third preset quantity is greater than 0.

The foregoing design avoids a case in which due to excessively long duration of a resource selection window used for CSI-RS resource selection, a relatively large quantity of CSI-RS resources fall within the window and cannot be processed by the terminal device, and sending of the CSI on the second PUCCH is affected.

In a possible design, the RS resource used to determine the CSI is the CSI-RS resource, the CSI-RS resource is M CSI-RS resources, and the method further includes: selecting, from the M CSI-RS resources, min{N,M} CSI-RS resources whose time domain positions are closest to the second physical uplink control channel, where N is a fourth preset quantity; and the determining the CSI based on a reference signal RS resource includes: determining the CSI based on the closest min{N,M} CSI-RS resources.

In a possible design, the CSI-RS resource used to determine the CSI and the PDSCH DMRS used to determine the CSI are in a non-quasi co-location QCL relationship, and the CSI-RS resource used to determine the CSI and the PDCCH DMRS used to determine the CSI are in a non-QCL relationship.

The CSI is reported based on a CSI-RS resource that is not in a QCL relationship with the PDSCH DMRS or the PDCCH DMRS, so that channel state quality of different beams (beam) can be obtained. This helps switch a communication link to a beam with better channel quality.

In a possible design, the CSI-RS resource used to determine the CSI incompletely overlaps or does not overlap a frequency domain resource on which the physical downlink shared channel is located.

In a possible design, the method further includes: receiving third higher layer signaling sent by the network device, where the third higher layer signaling is used to configure CSI-RS resources with different quantities of antenna ports; and selecting, from the CSI-RS resources with the different quantities of antenna ports, a CSI-RS resource with a quantity of ports less than or equal to a preset threshold, where the CSI-RS resource with the quantity of ports less than or equal to the preset threshold is used to determine the CSI.

In a possible design, the determining the CSI based on a reference signal RS resource includes: determining a plurality of channel quality indicators CQIs based on a resource position of the CSI-RS resource; and determining, based on the plurality of CQIs and a power offset of the CSI-RS resource, a CQI reported on the second physical uplink control channel.

According to a second aspect, an embodiment of this application provides a channel state information transmission method, including: sending first higher layer signaling to a terminal device, where the first higher layer signaling is used to indicate a first physical uplink control channel, and the first physical uplink control channel is a channel used to periodically report channel state information CSI; sending downlink control information to the terminal device, where the downlink control information is used to schedule a physical downlink shared channel; and receiving, by using the first physical uplink control channel and a second physical uplink control channel, the CSI sent by the terminal device, or receiving, by using a second physical uplink control channel, the CSI sent by the terminal device. The second physical uplink control channel is indicated by the downlink control information or second higher layer signaling, a time at which the CSI is received by using the second physical uplink control channel is earlier than a time at which the CSI is received by using a first physical uplink control channel in a next periodicity, and the next periodicity is a next periodicity of a periodicity in which the current first physical uplink control channel is located.

In a possible design, the method further includes: receiving indication information sent by the terminal device, where the indication information is used to indicate an index of the RS resource used to determine the CSI; and the RS resource includes a resource and includes at least one of a CSI-RS resource, a physical downlink shared channel data demodulation reference signal PDSCH DMRS resource, and a physical downlink control channel demodulation reference signal PDCCH DMRS resource.

According to a third aspect, an embodiment of this application provides a communications apparatus. The communications apparatus has a function of implementing behavior of the terminal device in the foregoing method. The function may be implemented by hardware, or may be implemented by hardware executing corresponding software. The hardware or software includes one or more modules corresponding to the foregoing function. In a possible design, a structure of the communications apparatus includes a processor and a transceiver. The processor is configured to enable the communications apparatus to perform a corresponding function in the foregoing method. The transceiver is configured to implement communication between the communications apparatus and a network device. The communications apparatus may further include a memory. The memory is configured to be coupled to the processor, and the memory stores program instructions and data that are necessary for the communications apparatus.

According to a fourth aspect, an embodiment of this application provides a communications apparatus. The communications apparatus has a function of implementing behavior of the network device in the foregoing method. The function may be implemented by hardware, or may be implemented by hardware executing corresponding software. The hardware or software includes one or more modules corresponding to the foregoing function. In a possible design, a structure of the communications apparatus includes a processor and a transceiver. The processor is configured to enable the communications apparatus to perform a corresponding function in the foregoing method. The transceiver is configured to implement communication between the communications apparatus and the terminal device. The communications apparatus may further include a memory. The memory is configured to be coupled to the processor, and the memory stores program instructions and data that are necessary for the communications apparatus.

According to a fifth aspect, an embodiment of this application provides a computer-readable storage medium. The computer-readable storage medium stores instructions, and when the instructions are executed, the method in any aspect is performed.

According to a sixth aspect, an embodiment of this application provides a computer program product including instructions. When the computer program product is run on a computer, the computer is enabled to perform the method according to the foregoing aspects.

According to a seventh aspect, this application provides a chip system. The chip system includes a processor, configured to support the communications apparatus in implementing the functions in the foregoing aspects, for example, generating or processing information in the foregoing methods. In a possible design, the chip system further includes a memory, and the memory is configured to store program instructions and data that are necessary for the communications apparatus. The chip system may include a chip, or may include a chip and another discrete component.

According to the channel state information transmission method and the apparatus in the embodiments of this application, the terminal device receives the DCI sent by the network device, where the DCI is used to schedule the PDSCH; and the terminal device receives and measures the RS resource, to determine CSI, and sends the CSI by using the first PUCCH and the second PUCCH, or sends the CSI by using the second PUCCH. Because the second PUCCH is indicated by the DCI used to schedule the PDSCH or the second higher layer signaling, and the time domain position of the second PUCCH is earlier than that of the first PUCCH in the next periodicity, the CSI can be reported flexibly and quickly.

### BRIEF DESCRIPTION OF DRAWINGS

The following briefly describes the accompanying drawings required for describing embodiments or the prior art.
FIG. 1 is an application scenario diagram of a technical solution of this application according to an embodiment of this application;
FIG. 2 is a flowchart of a channel state information transmission method according to an embodiment of this application;
FIG. 3 is a schematic diagram of a channel state information transmission method according to an embodiment of this application;
FIG. 4 is a flowchart of a channel state information transmission method according to an embodiment of this application;
FIG. 5 is a schematic diagram of a channel state information transmission method according to an embodiment of this application;
FIG. 6A is a schematic structural diagram of a communications apparatus according to an embodiment of this application; and
FIG. 6B is a schematic structural diagram of another communications apparatus according to an embodiment of this application.

### DESCRIPTION OF EMBODIMENTS

The following clearly describes the technical solutions in the embodiments of this application with reference to the accompanying drawings in the embodiments of this application.

In the specification, claims, and accompanying drawings of this application, the terms "first", "second", and so on (if any) are intended to distinguish between similar objects but do not necessarily indicate a specific order or sequence. It should be understood that the data termed in such a way are interchangeable in proper circumstances, so that the embodiments of this application described herein can be implemented in orders except the order illustrated or described herein. Moreover, the terms "include", "have" and any other variants mean to cover the non-exclusive inclusion, for example, a process, method, system, product, or device that includes a list of steps or units is not necessarily limited to those steps or units, but may include other steps or units not expressly listed or inherent to such a process, method, system, product, or device.

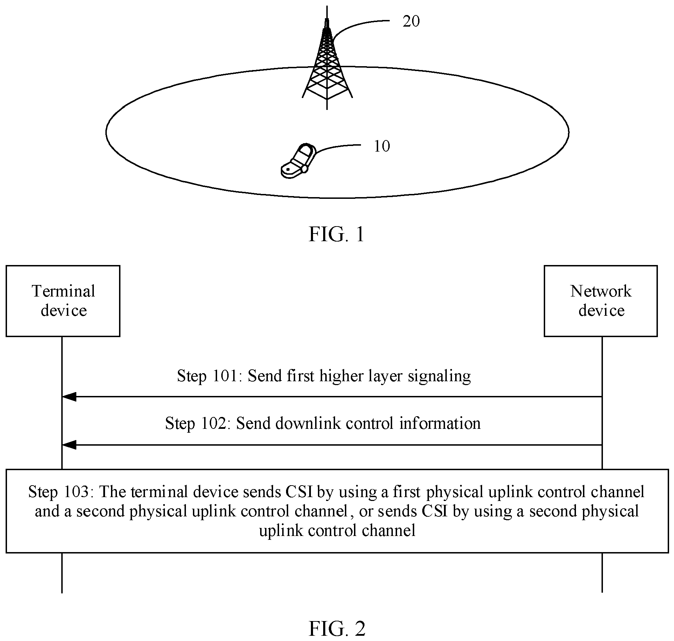

FIG. 1 is an application scenario diagram of a technical solution of this application according to an embodiment of this application. For clarity, FIG. 1 shows only one terminal device 10 and one network device 20. Actually, more terminal devices 10 and network devices 20 may be further included. The terminal device 10 communicates with the network device 20 through a wireless interface.

It should be noted that the network device in this application may be an evolved NodeB (evolved NodeB, eNB) in long term evolution (Long Term Evolution, LTE) or enhanced Long Term Evolution (evolved Long Term Evolution, eLTE), or a next generation-evolved NodeB (next generation-evolved NodeB, NG-eNB), or may be an access point (Access Point, AP) or a relay node in a WLAN, or may be a gNB in NR. This is not limited herein.

In addition, the terminal device (terminal device) in this application may also be referred to as user equipment (User Equipment, UE), a mobile terminal (Mobile Terminal, MT), mobile user equipment, or the like, and may communicate with one or more core networks by using a radio access network (for example, Radio Access Network, RAN). The user equipment may be a mobile terminal, for example, a mobile phone (or referred to as a "cellular" phone) and a computer with a mobility capability. For example, the user equipment may be a portable, pocket-sized, handheld, computer built-in, or vehicle-mounted mobile apparatus. Alternatively, the user equipment may be a communications device in machine type communication MTC.

It should be noted that the terminal devices in the embodiments of this application, if classified based on minimum marketable units, may include entire user equipments that are independently sold or chips in these entire user equipments.

"A plurality of' in this specification means two or more than two. The term "and/or" describes an association relationship for describing associated objects and represents that three relationships may exist. For example, A and/or B may represent the following three cases: Only A exists, both A and B exist, and only B exists. The character "/" generally represents an "or" relationship between the associated objects.

CSI in this specification is information determined by the terminal device based on a reference signal (reference signal, RS), and the CSI may include a type of information or any combination of information of: a channel quality indicator (channel quality indicator, CQI), a precoding matrix indicator (precoding matrix indicator, PMI), and a rank indicator (rank indicator, RI).

CQI: The CQI is a channel quality indicator and corresponds to a predefined modulation and coding combination list, that is, a CQI index that is fed back indicates a corresponding modulation and coding scheme. The terminal device performs channel measurement, determines the CQI based on a signal to interference plus noise ratio (Signal to Interference plus Noise Ratio, SINR), and reports the CQI to the network device, and the network device selects a modulation scheme, a data block size, and a code rate based on the CQI. The CQI also indicates the highest modulation and coding scheme that is adopted to ensure that a receive bit error rate of a downlink shared channel does not exceed 10% after the recommended PMI and RI are used. That is, a CQI value affects a modulation and coding scheme of downlink data.

PMI: The terminal device performs singular value decomposition (Singular value decomposition, SVD) on a channel matrix, and selects, from a codebook, a matrix having a minimum mean square error with a right singular value matrix obtained after the SVD, as a precoding matrix. The precoding matrix is used to determine a mapping relationship between a layer (layer) and an antenna port, and reflects a spatial characteristic of a channel. A quantity of data streams simultaneously transmitted in space is a quantity of layers (layer), that is, a quantity of data streams that can be independently and concurrently transmitted. The terminal device maps a codeword (codeword) to a plurality of data streams through layer mapping. Each data stream is referred to as a layer (layer), and the plurality of data streams are mapped to antenna ports by using the precoding matrix. The terminal device feeds back PMI information to the network device, and the network device determines an appropriate precoding matrix based on the PMI information.

RI: The terminal device performs SVD decomposition on the channel matrix to obtain a channel matrix rank. The channel matrix rank may be a maximum value of a value of the RI. For example, the channel matrix rank may be 2, and the RI that is fed back may be 1.

This application provides transmission methods in the following embodiments to transmit the CSI more flexibly and quickly. For specific explanation and description of the transmission method, refer to the following embodiments.

FIG. 2 is a flowchart of a channel state information transmission method according to an embodiment of this application. As shown in FIG. 2, the method in this embodiment may include the following steps.

Step 101. A network device sends first higher layer signaling to a terminal device.

The terminal device receives the first higher layer signaling sent by the network device. The first higher layer signaling is used to indicate a first physical uplink control channel (Physical uplink control channel, PUCCH), and the first PUCCH is a channel used to periodically report CSI. For example, the first higher layer information may be used to indicate one or more of information such as a resource position of the first PUCCH, a format (format), a periodicity, and a resource index. The first higher layer signaling may be radio resource control (RRC) signaling.

Step 102. The network device sends downlink control information to the terminal device.

The terminal device receives the downlink control information (Downlink control information, DCI) sent by the network device, and the downlink control information is used to schedule a physical downlink shared channel PDSCH.

The DCI in this embodiment is different from downlink control information (for example, DCI format 0_1) used for uplink scheduling. The DCI in this embodiment is used for downlink scheduling, that is, used for scheduling the PDSCH. For ease of description, the DCI used for downlink scheduling may be represented as DL DCI. For feedback information (an ACK or a NACK) of data received by using the PDSCH, the terminal device may send the feedback information to the network device by using the following second PUCCH.

The terminal device may monitor a PDCCH at a semi-statically configured (for example, configured by using the RRC signaling) monitoring moment, to receive the DCI used to schedule the PDSCH. After receiving the DCI, the terminal device measures an RS resource, and determines the CSI.

Step 103. The terminal device sends the CSI by using the first physical uplink control channel and a second physical uplink control channel, or sends the CSI by using a second physical uplink control channel.

The second PUCCH is indicated by the downlink control information or second higher layer signaling, a time at which the CSI is sent by using the second PUCCH is earlier than a time at which the CSI is sent by using a first PUCCH in a next periodicity, and the next periodicity is a next adjacent periodicity of a periodicity in which the current first PUCCH is located. The second higher layer signaling may be the radio resource control (RRC) signaling.

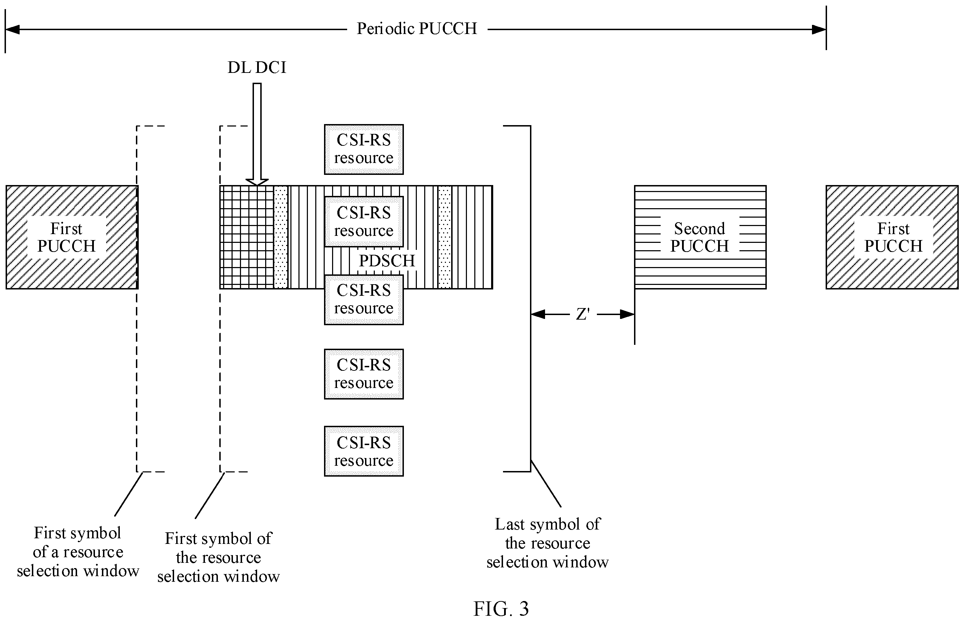

The periodicity in which the current first PUCCH is located is explained and described. The periodicity may be shown in FIG. 3, and starts from the first symbol of the leftmost first PUCCH and ends up with the first symbol of the last-side first PUCCH. The first PUCCHs are marked by using diagonal lines that tilt to the left. The current first PUCCH is the leftmost first PUCCH shown in FIG. 3, and the first PUCCH in the next periodicity is the rightmost first PUCCH shown in FIG. 3.

After determining the CSI, the terminal device sends the CSI by using the first PUCCH and the second PUCCH, or sends the CSI by using the second PUCCH. For a position relationship between the first PUCCH and the second PUCCH, refer to FIG. 3. As shown in FIG. 3, the second PUCCH (marked by using horizontal lines) is located between two first PUCCHs, that is, the time domain position of the second PUCCH is earlier than that of the first PUCCH in the next periodicity, so that CSI can be reported quickly.

Refer to FIG. 3, the foregoing method steps are described by using an example. For example, the terminal device receives first higher layer signaling sent by the network device. The first higher layer signaling is used to configure the first PUCCHs (only two first PUCCHs are shown in the figure) shown in FIG. 3 for the terminal device. The terminal device receives, at a position shown in FIG. 3, DL DCI sent by the network device, and receives and measures the CSI-RS resources shown in FIG. 3, to determine the CSI. The terminal device sends the CSI to the network device by using the second PUCCH shown in FIG. 3. As shown in FIG. 3, in the plurality of CSI-RS resources, there is a CSI-RS resource that does not overlap a frequency domain position of the PDSCH. The CSI-RS resource may be used to determine channel quality of a frequency band not at the frequency domain position of the PDSCH.

In this embodiment, the terminal device receives the DCI sent by the network device, where the DCI is used to schedule the PDSCH; and the terminal device receives and measures the RS resource, to determine the CSI, and sends the CSI by using the first PUCCH and the second PUCCH, or sends the CSI by using the second PUCCH. Because the second PUCCH is indicated by the DCI used to schedule the PDSCH or the second higher layer signaling, and the time domain position of the second PUCCH is earlier than that of the first PUCCH in the next periodicity, the CSI can be reported flexibly and quickly.

In some embodiments, the CSI transmitted in step 103 is determined by the terminal device based on the RS resource, and the RS resource includes at least one of the CSI-RS resource, a physical downlink shared channel data demodulation reference signal (PDSCH DMRS) resource, and a physical downlink control channel demodulation reference signal (PDCCH DMRS) resource. For example, the terminal device measures the CSI-RS resource and the PDSCH DMRS resource, and determines the CSI based on measurement results of the CSI-RS resource and the PDSCH DMRS resource.

The CSI-RS resource is a periodic CSI-RS resource.

PDCCH DMRS: The PDCCH DMRS is transmitted along with a PDCCH. A PDCCH DMRS sent only on a resource element group (Resource Element Group, REG) carrying the PDCCH is referred to as a narrowband DMRS. PDCCH DMRSs sent on all REGs of consecutive RBs of a CORESET blindly detected by the terminal device are referred to as wideband DMRSs. Channel estimation is performed on the physical downlink shared channel by using the PDCCH DMRS, and an obtained result is used for coherent detection and demodulation.

PDSCH DMRS: The PDSCH DMRS is transmitted along with the PDSCH. The PDSCH DMRS is used to perform channel estimation on the physical downlink shared channel, and an obtained result is used for coherent detection and demodulation.

In some embodiments, the terminal device may further send indication information to the network device. The indication information is used to indicate an index of the RS resource used to determine the CSI.

For example, the first N bits in the CSI may be used to indicate a type of the RS resource used to determine the CSI. There are two CSI-RS resources used to determine the CSI: a CSI-RS resource 1 and a CSI-RS resource 2. A mapping relationship of the first two bits in the CSI is as follows: '00' indicates that the RS resource used to determine the CSI is the PDSCH DMRS, '01' indicates that the RS resource used to determine the CSI is the PDCCH DMRS, '10' indicates that the RS resource used to determine the CSI is the CSI-RS resource 1, and '11' indicates the RS resource used to determine the CSI is the CSI-RS resource 2. In a possible implementation, the terminal device obtains one piece of CSI based on each of the four reference signals, selects one piece of CSI with best channel quality from the four pieces of CSI, sends the CSI on the second PUCCH, and indicates, by using the first two bits in the CSI, a type of a reference signal on which the CSI is based. After receiving the CSI, the network device determines, based on an indication of the first two bits, the reference signal corresponding to the CSI, to determine channel quality of a corresponding bandwidth based on a frequency domain resource occupied by the reference signal.

In this embodiment of this application, the RS resource used to determine the CSI may be any one or a combination of the CSI-RS resource, the PDSCH DMRS resource, and the PDCCH DMRS resource. The following explains and describes selection of the RS resource used to determine the CSI.

When the RS resource used to determine the CSI is the CSI-RS resource, the last time domain symbol in which the CSI-RS resource is located is before the second PUCCH by a first preset quantity of time domain symbols, and the first preset quantity is greater than 0.

For example, the first preset quantity may be a CSI calculation delay requirement Z', where a value of Z' may be 8, 11, 21, 36, or the like, and a unit is a time domain symbol.

In the possible implementation (manner 1) of determining the CSI based on the RS resource, the CSI-RS resource before the second PUCCH by the first preset quantity of time domain symbols is selected for receiving and measurement, to determine the CSI.

A resource range in which the CSI-RS resource is selected is referred to as a resource selection window. In the manner 1, the last time domain symbol Wₗₐₛₜ of the resource selection window, that is, the first preset quantity of time domain symbols before the second PUCCH, may be determined. For a position of the last time domain symbol Wₗₐₛₜ in the resource selection window, refer to FIG. 3.

When the RS resource used to determine the CSI is the CSI-RS resource, a time domain symbol in which the CSI-RS resource is located is not earlier than the first time domain symbol in the DCI.

In the another possible implementation (manner 2) of determining the CSI based on the RS resource, the CSI-RS resource not earlier than the first time domain symbol of the DCI is selected for receiving and measurement, to determine the CSI.

In the manner 2, the first time domain symbol W_{first} of the resource selection window, that is, the first time domain symbol of the DCI, may be determined. A position of the first time domain symbol W_{first} of the resource selection window may be a position of a second dashed-line box from left to right shown in FIG. 3.

When the RS resource used to determine the CSI is the CSI-RS resource, the CSI-RS resource is not earlier than a next time domain symbol of the last time domain symbol of a closest first PUCCH, and the closest first PUCCH is before the second PUCCH and is closest to the time domain position of the second PUCCH.

In the another possible implementation (manner 3) of determining the CSI based on the RS resource, the CSI-RS resource not earlier than the next time domain symbol of the last time domain symbol of the closest first PUCCH is selected for receiving and measurement, to determine the CSI. The closest first PUCCH is before the second PUCCH and closest to the time domain position of the second PUCCH.

In the another possible implementation of determining the first time domain symbol W_{first} of the resource selection window, that is, the manner 3, the first time domain symbol W_{first} of the resource selection window, that is, the next time domain symbol of the last time domain symbol of the closest first PUCCH, may be determined. A position of the first time domain symbol W_{first} of the resource selection window may be a position of a first dashed-line box from left to right shown in FIG. 3.

When the RS resource used to determine the CSI is the CSI-RS resource, the first time domain symbol in which the CSI-RS resource is located is not earlier than the second PUCCH by a second preset quantity, the second preset quantity is a sum of the first preset quantity and a third preset quantity, and the third preset quantity is greater than 0.

The third preset quantity may be duration preconfigured by the network device, and may be represented by W_{config}, for example, W_{config} = 14 time domain symbols.

In the another possible implementation (manner 4) of determining the CSI based on the RS resource, the first time domain symbol W_{first} and the last time domain symbol Wₗₐₛₜ of the resource selection window are determined in the foregoing manner 1 and manner 2, or in the foregoing manner 1 and manner 3. The resource selection window is determined based on min{W_{config},Wₗₐₛₜ₋W_{first}}, and the CSI-RS resource in the resource selection window is selected for receiving and measurement, to determine the CSI.

To avoid a case in which due to excessively long duration of the resource selection window, a relatively large quantity of CSI-RS resources fall within the window and cannot be processed by the terminal device, a maximum window length limit may be further set to min{W_{config}, Wₗₐₛₜ-W_{first}} in this embodiment of this application. If there are excessive CSI-RS resources in the window length Wₗₐₛₜ-W_{first}, a processing time of the terminal device is excessively long, and the terminal device cannot perform timely reporting on a second PUCCH resource indicated by the DCI for downlink scheduling, then the network device limits an actual window length by using preconfigured duration W_{config}. In this way, the terminal device can process, in time, a CSI-RS resource that falls within the window and report the CSI in time.

It should be noted that the window length limitation affects only a W_{first} position of the window, because an end symbol of the window is determined based on the time Z' that is required by the terminal device for processing.

In some embodiments, when the RS resource used to determine the CSI is the CSI-RS resource, the CSI-RS resource may further meet the following condition. In other words, the CSI-RS resource may further be sifted out in the following several manners (manner 5 to manner 7), to receive and measure the CSI-RS resource sifted out, to determine the CSI.

The CSI-RS resource used to determine the CSI and the PDSCH DMRS used to determine the CSI are in a non-quasi co-location (Quasi co-location, QCL) relationship, and the CSI-RS resource used to determine the CSI and the PDCCH DMRS used to determine the CSI are in a non-QCL relationship.

In the another possible implementation (manner 5) of determining the CSI based on the RS resource, the CSI-RS resource that is in the non-QCL relationship with the PDCCH DMRS used to determine the CSI or the PDSCH DMRS is selected for receiving and measurement, to determine the CSI.

QCL is explained and described as follows: When a large-scale parameter of a signal received through one antenna port can be deduced from another signal received through another antenna port, the two antenna ports are referred to as being QCLed. The large-scale parameter includes one or more of parameters such as a delay spread, a Doppler spread, a frequency offset, an average received power, and the like. For example, a given CSI-RS antenna port and a downlink shared channel DMRS are configured as being QCLed. The terminal device may assist the downlink shared channel DMRS in channel estimation based on the large-scale channel parameter information obtained based on the CSI-RS.

In NR, a relationship between receive beams of different signals or between different channels is determined by using a QCL type (including QCL Type A, QCL Type B, QCL Type C, and QCL Type D). A receive beam of the PDSCH DMRS may be different from a receive beam of the CSI-RS. In this embodiment of this application, the CSI is reported in the manner 5 based on CSI-RS resources that have a relationship different from the QCL relationship between PDSCH DMRSs, so that channel state quality of different beams (beam) can be obtained. This helps switch a communication link to a beam with better channel quality.

The manner 5 may alternatively be another possible implementation. A CSI-RS resource is selected for receiving and measurement, to determine the CSI, where the CSI-RS resource and a PDSCH DMRS or a PDCCH DMRS used to determine the CSI have different QCL reference source signals.

For example, there is a QCL relationship between the PDSCH DMRS and a tracking reference signal (tracking reference signal, TRS), and there is a QCL relationship between a CSI-RS resource 1 and the TRS. That is, the PDSCH DMRS and the CSI-RS resource 1 have a same QCL reference source signal, and in this case, the CSI-RS resource 1 is not selected as the CSI-RS resource used to determine CSI.

The CSI-RS resource used to determine the CSI incompletely overlaps or does not overlap a frequency domain resource on which the physical downlink shared channel is located. For example, as shown in FIG. 3, the CSI-RS resource may include a CSI-RS resource that incompletely overlaps or does not overlap a frequency domain resource on which a PDSCH is located.

In the another possible implementation (manner 6) of determining the CSI based on the RS resource, the CSI-RS resource is selected for receiving and measurement, to determine the CSI, where the CSI-RS resource incompletely overlaps or does not overlap a frequency domain resource on which the PDSCH is located.

In frequency domain, channel quality in an RB occupied by the PDSCH may be obtained by measuring the PDSCH DMRS by using the existing solution, and for channel quality outside the RB occupied by the PDSCH, the foregoing manner 6 may be used to measure the CSI-RS resource whose occupied bandwidth incompletely overlaps or does not overlap the RB occupied by the PDSCH DMRS. There are two possible implementations: If the RB occupied by the CSI-RS resource is a fullband, the PDSCH scheduled by the downlink DCI performs rate matching on an RE occupied by the CSI-RS. If the RB occupied by a periodic CSI-RS resource is not a fullband, a CSI-RS resource that falls within the window is determined based on the frequency domain position of the PDSCH scheduled by the downlink DCI, for example, a CSI-RS resource that incompletely/partially overlaps the RB occupied by the PDSCH in frequency domain.

In the another possible implementation (manner 7) of determining the CSI based on the RS resource, a CSI-RS resource with a quantity of ports less than or equal to a preset threshold is selected, from CSI-RS resources with different quantities of antenna ports, for receiving and measurement, to determine the CSI. The CSI-RS resources with different quantities of antenna ports are configured by the network device by using third higher layer signaling. The third higher layer signaling may be radio resource control (RRC) signaling.

In space, the terminal device may alternatively select a single-port (port) CSI-RS resource, or measure only a CSI-RS resource whose port quantity is equal to a preconfigured port quantity. For each CSI-RS resource, the network device configures, by using the third higher layer signaling, a port quantity corresponding to the CSI-RS resource. The network device preconfigures one port quantity by using the third higher layer signaling, and the terminal device performs sifting, based on the port quantity, on CSI-RS resources that fall within the resource selection window, and selects a CSI-RS resource that matches the preconfigured port quantity for receiving and measurement, to determine the CSI.

The CSI-RS resource is selected in one or more of the foregoing manner 1 to manner 7. It is assumed that the selected CSI-RS resource is M CSI-RS resources. In this embodiment of this application, the CSI-RS resources used to determine the CSI may be further sifted out by using the following steps. In a specific implementation, from the M CSI-RS resources, min{N,M} CSI-RS resources whose time domain positions are closest to the second physical uplink control channel are selected, where N is a fourth preset quantity. The CSI is determined based on the closest min{N,M} CSI-RS resources.

In other words, the quantity of the CSI-RS resources used to determine the CSI is selected by using the fourth preset quantity.

Based on the foregoing embodiment, the network device may further configure, for the terminal device, one or more third PUCCHs whose periodicities are different from the periodicity of the first PUCCH.

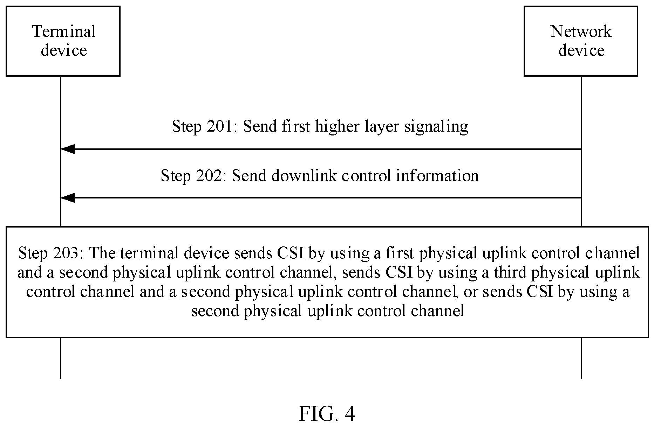

FIG. 4 is a flowchart of a channel state information transmission method according to an embodiment of this application. As shown in FIG. 4, the method in this embodiment may include the following steps.

Step 201. A network device sends first higher layer signaling to a terminal device.

For a specific explanation and description, refer to step 101 in the embodiment shown in FIG. 2. Different from the first higher layer signaling in step 101, this first higher layer signaling may be further used to indicate one or more third PUCCHs. The third PUCCH is a channel used to periodically report CSI, and each third PUCCH and a first PUCCH belong to different periodicities.

For example, one third PUCCH is used as an example. Refer to FIG. 4, the third PUCCH is used to periodically report the CSI, and the third PUCCH and the first PUCCH belong to different periodicities. Different configuration identifiers may be used to distinguish between the first PUCCH and the third PUCCH, and the configuration identifier may be bound to an identifier of a CSI reporting configuration. Each CSI reporting configuration is bound to one CSI-RS resource configuration, and each CSI-RS resource configuration includes a maximum of 16 CSI-RS resource sets. One CSI-RS resource set is a periodic CSI-RS resource set, and the periodic CSI-RS resource set includes a plurality of CSI-RS resources. Each CSI reporting configuration is bound to the first PUCCH, or is bound to the third PUCCH. In other words, it may be understood that a configuration identifier of the first PUCCH is different from a configuration identifier of the third PUCCH, and an identifier of a CSI reporting configuration bound to the first PUCCH is different from an identifier of a CSI reporting configuration bound to the third PUCCH.

For differentiation, a CSI-RS resource bound to the configuration identifier of the first PUCCH is referred to as a first CSI-RS resource, and a CSI-RS resource bound to the configuration identifier of the third PUCCH is referred to as a second CSI-RS resource. The first CSI-RS resource is not earlier than a next time domain symbol of the last time domain symbol of a closest first PUCCH, the closest first PUCCH is before the second PUCCH and is closest to a time domain position of the second PUCCH, each second CSI-RS resource is not earlier than a next time domain symbol of the last time domain symbol of a closest third PUCCH, and the closest third PUCCH is before the second PUCCH, closest to the time domain position of the second PUCCH, and bound to the second CSI-RS resource.

Step 202. The network device sends downlink control information to the terminal device.

With reference to the description of step 102 in the embodiment shown in FIG. 2, the DCI is used to schedule a PDSCH. The terminal device may monitor a PDCCH at a semi-statically configured monitoring moment, to receive the DCI used to schedule the PDSCH. After receiving the DCI, the terminal device receives and measures an RS resource, to determine the CSI.

The CSI may be reported based on periodic CSI-RS resources bound to CSI reporting configurations with a plurality of configuration identifiers, or the CSI may be reported based on periodic CSI-RS resources (for example, the CSI-RS resources in the first row or the CSI-RS resources in the second row in FIG. 4) bound to CSI reporting configurations with one configuration identifier.

The terminal device may receive and measure the first CSI-RS resource and/or the second CSI-RS resource, to determine the CSI.

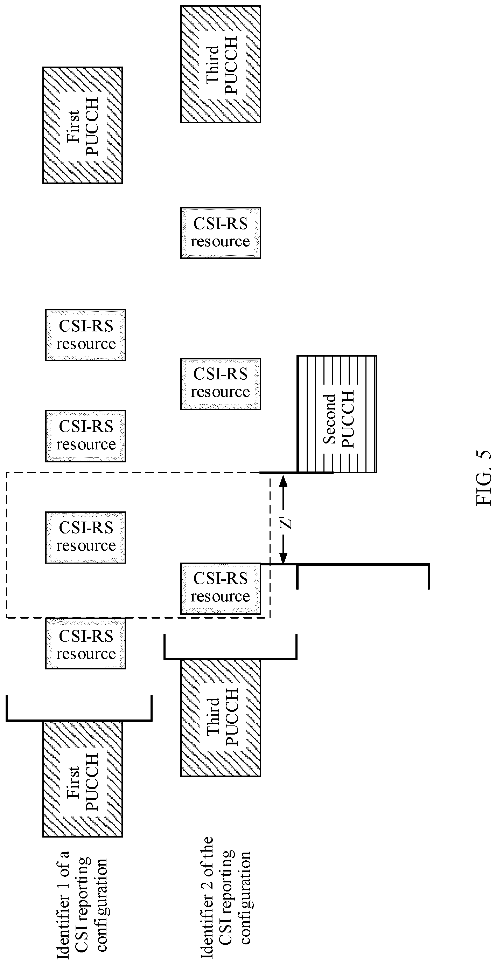

Any one of the foregoing manner 1 to manner 7 or a combination thereof may be used as a manner of sifting out the CSI-RS resource used to determine the CSI. For example, as shown in FIG. 5, it is determined, based on positions of the first PUCCH, the second PUCCH, and the third PUCCH, to select the CSI-RS resource in the dashed box for receiving and measurement, to determine the CSI.

Step 203. The terminal device sends the CSI by using the first physical uplink control channel and the second physical uplink control channel, sends the CSI by using the third physical uplink control channel and the second physical uplink control channel, or sends the CSI by using the second physical uplink control channel.

The time domain position at which the second physical uplink control channel is located is earlier than a time domain position at which any third physical uplink control channel is located.

In this embodiment, the terminal device receives the DCI sent by the network device, where the DCI is used to schedule the PDSCH. The terminal device receives and measures the RS resource, to determine the CSI, and sends the CSI by using the first physical uplink control channel and the second physical uplink control channel, sends the CSI by using the third physical uplink control channel and the second physical uplink control channel, or sends the CSI by using the second physical uplink control channel. Because the second PUCCH is indicated by the DCI used to schedule the PDSCH or second higher layer signaling, and the time domain position of the second PUCCH is earlier than those of a first PUCCH and a second PUCCH in a next periodicity, the CSI can be reported flexibly and quickly.

It should be noted that, the CSI-RS resource is sifted out in any one of the manner 1 to the manner 7 in the foregoing embodiment or a combination thereof, and the CSI-RS resource sifted out is received and measured, to determine the CSI.

During determining of the CSI, a plurality of pieces of CSI may be further determined based on resource positions of a plurality of CSI-RS resources, and the CSI reported by using the second PUCCH is determined based on power offsets of the plurality of pieces of CSI and the plurality of CSI-RS resources. For example, the CSI may be a CQI.

For example, the network device may configure, by using a higher layer signaling power control offset (powerControlOffset), a power offset between an RE on which the CSI-RS resource is located and an RE on which the PDSCH is located. A value of the power offset is {-8, ..., 15}, and a unit is dB. If the power offset configured by using the higher layer signaling is -3 dB, power of an RE on which a PDSCH DMRS resource is located is one time higher than power of the RE in which the CSI-RS resource is located. If CSI obtained based on the PDSCH DMRS resource is CQI A, and CSI obtained based on the CSI-RS resource is also CQI A, a power offset further needs to be considered for the CSI obtained based on the CSI-RS resource, to obtain CQI A+3. This indicates that channel quality of the CSI-RS resource is higher than channel quality of the PDSCH DMRS resource.

In the foregoing embodiments provided in this application, the solutions of the CSI transmission method provided in the embodiments of this application are separately described from perspectives of the terminal device, the network device, and interaction between the terminal device and the network device. It may be understood that, to implement the foregoing functions, the communications apparatus, for example, the foregoing terminal device and the network device, includes corresponding hardware structures and/or software modules for performing the functions. A person skilled in the art should easily be aware that, in combination with units and algorithm steps of the examples described in the embodiments disclosed in this specification, this application can be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

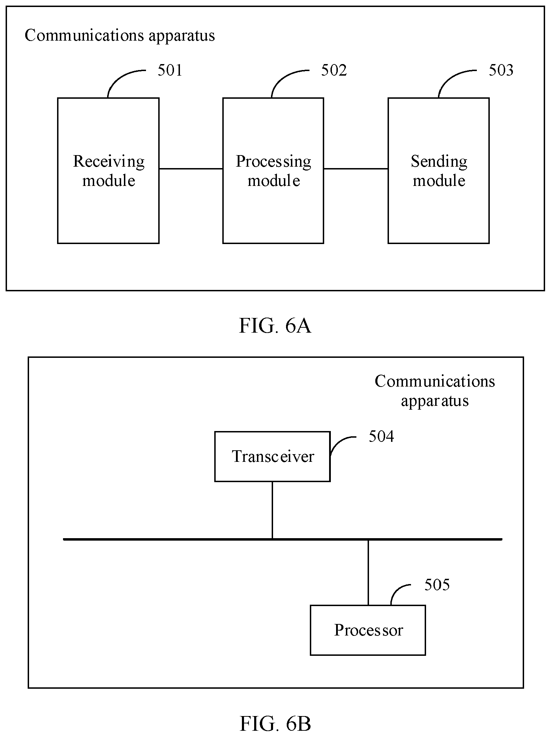

For example, when the communications apparatus implements a corresponding function by using a software module, the communications apparatus may include a receiving module 501, a processing module 502, and a sending module 503, as shown in FIG. 6A.

In an embodiment, the communications apparatus may be configured to perform an operation of the terminal device in FIG. 2.

For example, the receiving module 501 is configured to receive first higher layer signaling sent by a network device, where the first higher layer signaling is used to indicate a first physical uplink control channel, and the first physical uplink control channel is a channel used to periodically report channel state information CSI.

The receiving module 501 is further configured to receive downlink control information sent by the network device, where the downlink control information is used to schedule a physical downlink shared channel.

The processing module 502 is configured to send the CSI by using the first physical uplink control channel and a second physical uplink control channel and by using the sending module 502, or send the CSI by using the second physical uplink control channel and by using the sending module 503.

The second physical uplink control channel is indicated by the downlink control information or second higher layer signaling, a time at which the CSI is sent by using the second physical uplink control channel is earlier than a time at which the CSI is sent by using a first physical uplink control channel in a next periodicity, and the next periodicity is a next periodicity of a periodicity in which the current first physical uplink control channel is located.

Therefore, in this embodiment of this application, the communications apparatus can report the CSI flexibly and quickly.

Optionally, a time domain position at which the second physical uplink control channel is located is earlier than a time domain position at which any third physical uplink control channel is located, each third physical uplink control channel is a channel used to periodically report the CSI, and the third physical uplink control channel and the first physical uplink control channel belong to different periodicities.

Optionally, the processing module 502 is further configured to determine the CSI based on a reference signal RS resource, where the RS resource includes at least one of a CSI-RS resource, a physical downlink shared channel data demodulation reference signal PDSCH DMRS resource, and a physical downlink control channel demodulation reference signal PDCCH DMRS resource. The sending module 503 is further configured to send indication information to the network device, where the indication information is used to indicate an index of the RS resource used to determine the CSI.

Optionally, the RS resource used to determine the CSI is the CSI-RS resource, the last time domain symbol in which the CSI-RS resource is located is before the second physical uplink control channel by a first preset quantity of time domain symbols, and the first preset quantity is greater than 0.

Optionally, the RS resource used to determine the CSI is the CSI-RS resource; and a time domain symbol in which the CSI-RS resource is located is not earlier than the first time domain symbol of the downlink control information; or the CSI-RS resource includes a first CSI-RS resource and a second CSI-RS resource, the first CSI-RS resource is not earlier than a next time domain symbol of the last time domain symbol of a closest first physical uplink control channel, the closest first physical uplink control channel is before the second physical uplink control channel and is closest to a time domain position of the second physical uplink control channel, each second CSI-RS resource is not earlier than a next time domain symbol of the last time domain symbol of a closest third physical uplink control channel, and the closest third physical uplink control channel is before the second physical uplink control channel, closest to the time domain position of the second physical uplink control channel, and bound to the second CSI-RS resource.

Optionally, the RS resource used to determine the CSI is the CSI-RS resource, the first time domain symbol in which the CSI-RS resource is located is not earlier than the second physical uplink control channel by a second preset quantity of time domain symbols, the second preset quantity is a sum of the first preset quantity and a third preset quantity, and the third preset quantity is greater than 0.

Optionally, the RS resource used to determine the CSI is the CSI-RS resource, the CSI-RS resource is M CSI-RS resources, and the processing module 502 is further configured to: select, from the M CSI-RS resources, min{N,M} CSI-RS resources whose time domain positions are closest to the second physical uplink control channel, where N is a fourth preset quantity; and determine the CSI based on the closest min{N,M} CSI-RS resources.

In addition, the receiving module 501, the processing module 502, and the sending module 503 in the communications apparatus may further implement other operations or functions of the terminal device in the foregoing method. Details are not described herein again.

In another embodiment, the communications apparatus shown in FIG. 6A may be further configured to perform an operation of the network device in FIG. 2.

For example, the sending module 503 is configured to send first higher layer signaling to a terminal device, where the first higher layer signaling is used to indicate a first physical uplink control channel, and the first physical uplink control channel is a channel used to periodically report channel state information CSI.

The sending module 503 is further configured to send downlink control information to the terminal device, where the downlink control information is used to schedule a physical downlink shared channel.

The processing module 502 is configured to control the receiving module 501 to receive, by using the first physical uplink control channel and a second physical uplink control channel, the CSI sent by the terminal device, or receive, by using a second physical uplink control channel, the CSI sent by the terminal device.

The second physical uplink control channel is indicated by the downlink control information or second higher layer signaling, a time at which the CSI is received by using the second physical uplink control channel is earlier than a time at which the CSI is received by using a first physical uplink control channel in a next periodicity, and the next periodicity is a next periodicity of a periodicity in which the current first physical uplink control channel is located.

Therefore, in this embodiment of this application, the communications apparatus can report the CSI flexibly and quickly.

Optionally, the receiving module 501 is further configured to receive indication information sent by the terminal device, where the indication information is used to indicate an index of an RS resource used to determine the CSI; and the RS resource includes a resource and includes at least one of a CSI-RS resource, a physical downlink shared channel data demodulation reference signal PDSCH DMRS resource, and a physical downlink control channel demodulation reference signal PDCCH DMRS resource.

In addition, the receiving module 501, the processing module 502, and the sending module 503 in the communications apparatus may further implement other operations or functions of the network device in the foregoing method. Details are not described herein again.

FIG. 6B is another possible schematic structural diagram of the communications apparatus in the foregoing embodiments. The communications apparatus includes a transceiver 504 and a processor 505, as shown in FIG. 6B. Optionally, the communications apparatus further includes a memory 506. The memory 506 is configured to be coupled to the processor 505, and the memory stores a computer program necessary for the communications apparatus.

For example, in an embodiment, the processor 505 is configured to perform another operation or function of a terminal device. The transceiver 504 is configured to implement communication between the communications apparatus and a network device.

In another embodiment, the processor 505 is configured to perform another operation or function of the network device. The transceiver 504 is configured to implement communication between the communications apparatus and the terminal device.

The controller/processor configured to perform the foregoing CSI transmission method in this application may be a central processing unit (CPU), a general-purpose processor, a digital signal processor (DSP), an application-specific integrated circuit (ASIC), a field programmable gate array (FPGA) or another programmable logic device, a transistor logical device, a hardware component, or any combination thereof. The controller/processor may implement or execute various example logical blocks, modules, and circuits described with reference to content disclosed in this application. The processor may alternatively be a combination of implementing a computing function, for example, a combination of one or more microprocessors or a combination of a DSP and a microprocessor.

The method or algorithm steps described with reference to the content disclosed in this application may be implemented by hardware, or may be implemented by a processor by executing software instructions. The software instructions may include a corresponding software module. The software module may be located in a RAM memory, a flash memory, a ROM memory, an EPROM memory, an EEPROM memory, a register, a hard disk, a removable hard disk, a CD-ROM, or a storage medium of any other form known in the art. For example, a storage medium is coupled to a processor, so that the processor can read information from the storage medium or write information into the storage medium. Certainly, the storage medium may alternatively be a component of the processor. The processor and the storage medium may also be located in an ASIC. In addition, the ASIC may be located in the radio access network device. Certainly, the processor and the storage medium may alternatively exist in the radio access network device as discrete components.

All or some of the foregoing embodiments may be implemented by software, hardware, firmware, or any combination thereof. When software is used for implementation, all or some of the embodiments may be implemented in a form of computer program product. The computer program product includes one or more computer instructions. When the computer program instructions are loaded and executed on a computer, all or some of the procedures or the functions according to the embodiments of this application are generated. The computer may be a general-purpose computer, a special-purpose computer, a computer network, or another programmable apparatus. The computer instructions may be stored in a computer-readable storage medium or may be transmitted from one computer-readable storage medium to another computer-readable storage medium. For example, the computer instructions may be transmitted from one website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid state drive (Solid State Disk, SSD)), or the like.

The objectives, technical solutions, and benefits of this application are further described in detail in the foregoing specific embodiments. It should be understood that the foregoing descriptions are merely specific implementations of this application, but are not intended to limit the protection scope of this application. Any modification, equivalent replacement or improvement made based on technical solutions of this application shall fall within the protection scope of this application.

## Claims

1. A channel state information transmission method, comprising:
receiving first higher layer signaling sent by a network device, wherein the first higher layer signaling is used to indicate a first physical uplink control channel, and the first physical uplink control channel is a channel used to periodically report channel state information CSI;
receiving downlink control information sent by the network device, wherein the downlink control information is used to schedule a physical downlink shared channel; and
sending the CSI by using the first physical uplink control channel and a second physical uplink control channel, or sending the CSI by using a second physical uplink control channel, wherein
the second physical uplink control channel is indicated by the downlink control information or second higher layer signaling, a time at which the CSI is sent by using the second physical uplink control channel is earlier than a time at which the CSI is sent by using a first physical uplink control channel in a next periodicity, and the next periodicity is a next periodicity of a periodicity in which the current first physical uplink control channel is located.

2. The method according to claim 1, wherein a time domain position at which the second physical uplink control channel is located is earlier than a time domain position at which any third physical uplink control channel is located, each third physical uplink control channel is a channel used to periodically report the CSI, and the third physical uplink control channel and the first physical uplink control channel belong to different periodicities.

3. The method according to claim 1 or 2, wherein the method further comprises:
determining the CSI based on a reference signal RS resource, wherein the RS resource comprises at least one of a CSI-RS resource, a physical downlink shared channel data demodulation reference signal PDSCH DMRS resource, and a physical downlink control channel demodulation reference signal PDCCH DMRS resource; and
sending indication information to the network device, wherein the indication information is used to indicate an index of the RS resource used to determine the CSI.

4. The method according to claim 3, wherein the RS resource used to determine the CSI is the CSI-RS resource, the last time domain symbol in which the CSI-RS resource is located is before the second physical uplink control channel by a first preset quantity of time domain symbols, and the first preset quantity is greater than 0.

5. The method according to claim 3 or 4, wherein the RS resource used to determine the CSI is the CSI-RS resource; and
a time domain symbol in which the CSI-RS resource is located is not earlier than the first time domain symbol of the downlink control information; or
the CSI-RS resource comprises a first CSI-RS resource and a second CSI-RS resource, the first CSI-RS resource is not earlier than a next time domain symbol of the last time domain symbol of a closest first physical uplink control channel, the closest first physical uplink control channel is before the second physical uplink control channel and is closest to the time domain position of the second physical uplink control channel, each second CSI-RS resource is not earlier than a next time domain symbol of the last time domain symbol of a closest third physical uplink control channel, and the closest third physical uplink control channel is before the second physical uplink control channel, closest to the time domain position of the second physical uplink control channel, and bound to the second CSI-RS resource.

6. The method according to any one of claims 3 to 5, wherein the RS resource used to determine the CSI is the CSI-RS resource, the first time domain symbol in which the CSI-RS resource is located is not earlier than the second physical uplink control channel by a second preset quantity of time domain symbols, the second preset quantity is a sum of the first preset quantity and a third preset quantity, and the third preset quantity is greater than 0.

7. The method according to any one of claims 4 to 6, wherein the RS resource used to determine the CSI is the CSI-RS resource, the CSI-RS resource is M CSI-RS resources, and the method further comprises:
selecting, from the M CSI-RS resources, min{N,M} CSI-RS resources whose time domain positions are closest to the second physical uplink control channel, wherein N is a fourth preset quantity; and
the determining the CSI based on a reference signal RS resource comprises:
determining the CSI based on the closest min{N,M} CSI-RS resources.

8. A channel state information transmission method, comprising:
sending first higher layer signaling to a terminal device, wherein the first higher layer signaling is used to indicate a first physical uplink control channel, and the first physical uplink control channel is a channel used to periodically report channel state information CSI;
sending downlink control information to the terminal device, wherein the downlink control information is used to schedule a physical downlink shared channel; and
receiving, by using the first physical uplink control channel and a second physical uplink control channel, the CSI sent by the terminal device, or receiving, by using a second physical uplink control channel, the CSI sent by the terminal device, wherein
the second physical uplink control channel is indicated by the downlink control information or second higher layer signaling, a time at which the CSI is received by using the second physical uplink control channel is earlier than a time at which the CSI is received by using a first physical uplink control channel in a next periodicity, and the next periodicity is a next periodicity of a periodicity in which the current first physical uplink control channel is located.

9. The method according to claim 8, wherein the method further comprises:
receiving indication information sent by the terminal device, wherein the indication information is used to indicate an index of an RS resource used to determine the CSI; and
the RS resource comprises a resource and comprises at least one of a CSI-RS resource, a physical downlink shared channel data demodulation reference signal PDSCH DMRS resource, and a physical downlink control channel demodulation reference signal PDCCH DMRS resource.

10. A terminal device, comprising:
a receiving module, configured to receive first higher layer signaling sent by a network device, wherein the first higher layer signaling is used to indicate a first physical uplink control channel, and the first physical uplink control channel is a channel used to periodically report channel state information CSI; and
the receiving module is further configured to receive downlink control information sent by the network device, wherein the downlink control information is used to schedule a physical downlink shared channel; and
a processing module, configured to send the CSI by using the first physical uplink control channel and a second physical uplink control channel by using a sending module, or send the CSI by using a second physical uplink control channel and by using a sending module, wherein
the second physical uplink control channel is indicated by the downlink control information or second higher layer signaling, a time at which the CSI is sent by using the second physical uplink control channel is earlier than a time at which the CSI is sent by using a first physical uplink control channel in a next periodicity, and the next periodicity is a next periodicity of a periodicity in which the current first physical uplink control channel is located.

11. The terminal device according to claim 10, wherein a time domain position at which the second physical uplink control channel is located is earlier than a time domain position at which any third physical uplink control channel is located, each third physical uplink control channel is a channel used to periodically report the CSI, and the third physical uplink control channel and the first physical uplink control channel belong to different periodicities.

12. The terminal device according to claim 11, wherein the processing module is further configured to:
determine the CSI based on a reference signal RS resource, wherein the RS resource comprises at least one of a CSI-RS resource, a physical downlink shared channel data demodulation reference signal PDSCH DMRS resource, and a physical downlink control channel demodulation reference signal PDCCH DMRS resource; and
the sending module is further configured to send indication information to the network device, wherein the indication information is used to indicate an index of the RS resource used to determine the CSI.

13. The terminal device according to claim 12, wherein the RS resource used to determine the CSI is the CSI-RS resource, the last time domain symbol in which the CSI-RS resource is located is before the second physical uplink control channel by a first preset quantity of time domain symbols, and the first preset quantity is greater than 0.

14. The terminal device according to claim 12 or 13, wherein the RS resource used to determine the CSI is the CSI-RS resource;
a time domain symbol in which the CSI-RS resource is located is not earlier than the first time domain symbol of the downlink control information; or
the CSI-RS resource comprises a first CSI-RS resource and a second CSI-RS resource, the first CSI-RS resource is not earlier than a next time domain symbol of the last time domain symbol of a closest first physical uplink control channel, the closest first physical uplink control channel is before the second physical uplink control channel and is closest to the time domain position of the second physical uplink control channel, each second CSI-RS resource is not earlier than a next time domain symbol of the last time domain symbol of a closest third physical uplink control channel, and the closest third physical uplink control channel is before the second physical uplink control channel, closest to the time domain position of the second physical uplink control channel, and bound to the second CSI-RS resource.

15. The terminal device according to any one of claims 12 to 14, wherein the RS resource used to determine the CSI is the CSI-RS resource, the first time domain symbol in which the CSI-RS resource is located is not earlier than the second physical uplink control channel by a second preset quantity of time domain symbols, the second preset quantity is a sum of the first preset quantity and a third preset quantity, and the third preset quantity is greater than 0.

16. The terminal device according to any one of claims 13 to 15, wherein the RS resource used to determine the CSI is the CSI-RS resource, the CSI-RS resource is M CSI-RS resources, and the processing module is further configured to:
select, from the M CSI-RS resources, min{N,M} CSI-RS resources whose time domain positions are closest to the second physical uplink control channel, wherein N is a fourth preset quantity; and
determine the CSI based on the closest min{N,M} CSI-RS resources.

17. A network device, comprising:
a sending module, configured to send first higher layer signaling to a terminal device, wherein the first higher layer signaling is used to indicate a first physical uplink control channel, and the first physical uplink control channel is a channel used to periodically report channel state information CSI; and
the sending module is further configured to send downlink control information to the terminal device, wherein the downlink control information is used to schedule a physical downlink shared channel; and
a processing module is configured to control a receiving module to receive, by using the first physical uplink control channel and a second physical uplink control channel, the CSI sent by the terminal device, or receive, by using a second physical uplink control channel, the CSI sent by the terminal device, wherein
the second physical uplink control channel is indicated by the downlink control information or second higher layer signaling, a time at which the CSI is received by using the second physical uplink control channel is earlier than a time at which the CSI is received by using a first physical uplink control channel in a next periodicity, and the next periodicity is a next periodicity of a periodicity in which the current first physical uplink control channel is located.

18. The network device according to claim 17, wherein the receiving module is further configured to:
receive indication information sent by the terminal device, wherein the indication information is used to indicate an index of an RS resource used to determine the CSI; and
the RS resource comprises a resource and comprises at least one of a CSI-RS resource, a physical downlink shared channel data demodulation reference signal PDSCH DMRS resource, and a physical downlink control channel demodulation reference signal PDCCH DMRS resource.
